# EUROPEAN PATENT APPLICATION

(11) **EP 1 135 000 A1**
(43) Date of publication of application: **19.09.2001**
(21) Application number: 00105723.1
(22) Date of filing: 17.03.2000
(51) Int. Cl.: H04Q 11/04

(54) **Link aggregation**

(71) Applicant: TELEFONAKTIEBOLAGET LM ERICSSON, 126 25 Stockholm (SE)
(72) Inventor: Zeyu Song, Jack, 141 71 Huddinge (SE); Öster, Gert, 175 48 Järfälla (SE)
(74) Representative: Wideberg, Olle Sven

(57) **Abstract**

The present invention relates to a method to optimise a selection of a route (Z) in a communication system having branch points (A-F) of transmission links (L1-L9). The quality of each link is represented by a topology metric value (TM) and a topology attribute value (TA). The method comprises the following steps:
- Selecting among a set of parallel links (L1, L2, L3) between two branch points (B, E), a link (L1) having the best topology metric value (TM1).
- Selecting among the set of parallel links (L1, L2, L3) between the two branch points (B, E), a link (L3) having the best topology attribute value (TA).
- Aggregating the set of multiple links into an abstract link (SUPER) between the two branch points (B, E), the abstract link being represented by the best topology metric value (TM) and by the best topology attribute value (TA).

## Description

### TECHNICAL FIELD OF THE INVENTION

The present invention relates to a method and an arrangement to optimise route selection in a communication system.

### DESCRIPTION OF RELATED ART

A large-scale communication network includes a plurality of nodes or switches as branch points of transmission routes. If a plurality of physical transmission links or logical links is typically provided between the switches in the network, there is a plurality of routes possible to use from one switch to another in the network. Each link has different topology qualities, so called topology metrics and topology attributes. The topology metrics is a quality measure of a link before a given connection. The topology metrics is arranged into a topology metric value, which is a static value. The topology attributes is a quality measure of a link when carrying a given connection. The topology attributes is arranged into a topology attribute value, which is a dynamic value that might change over time. Traffic characteristics such as cell delay variation and administrative weight are examples of topology metrics. Cell rate and cell loss ratio are examples of topology attributes.

In the patent US 5,535,195 a method is disclosed for efficient aggregation of link metrics for a sub-network in a communication network. The network has a plurality of interconnected sub-networks consisting of nodes and lines. The method in the US-patent selects nodes to be exposed in the sub-network.

ATM source routing is based on pre-calculation of routes (ATM: Asynchronous Transfer Mode). DJIKSTRA is a well-known pre-calculating algorithm, described in "The ATM Forum, Private Network-Network Interface" from March 1996. DJIKSTRA accumulates topology metric values along a route to find the best (and next best and so on) route. When a route is found its topology attribute value is examined. When two nodes with multiple parallel links in-between are part of a route, that part of the route can be described in two different ways according to the PNNI specification (PNNI: Private Network-Networks Interface):
1. A link between two nodes is explicitly pointed out for the route. The out-pointed link then has to be used when using the route.
2. Without pointing out any specific link between two nodes. Instead the two nodes are pointed out and any link of the set of multiple links between the nodes can by mere chance be selected to represent the route.

The problem with the first approach (1) is that a new route has to be calculated in case the out-pointed link does not fulfil specified requirements.

The second approach (2), also causes problems. In case of a set of multiple parallel links between the two nodes, the selected link might have a topology attribute value below a desired level and can consequently not be used. Even if other links in the set of the multiple parallel links between the two nodes are well qualified to be selected, these links have not been pointed out as representing the two nodes. Instead another path is selected for the route.

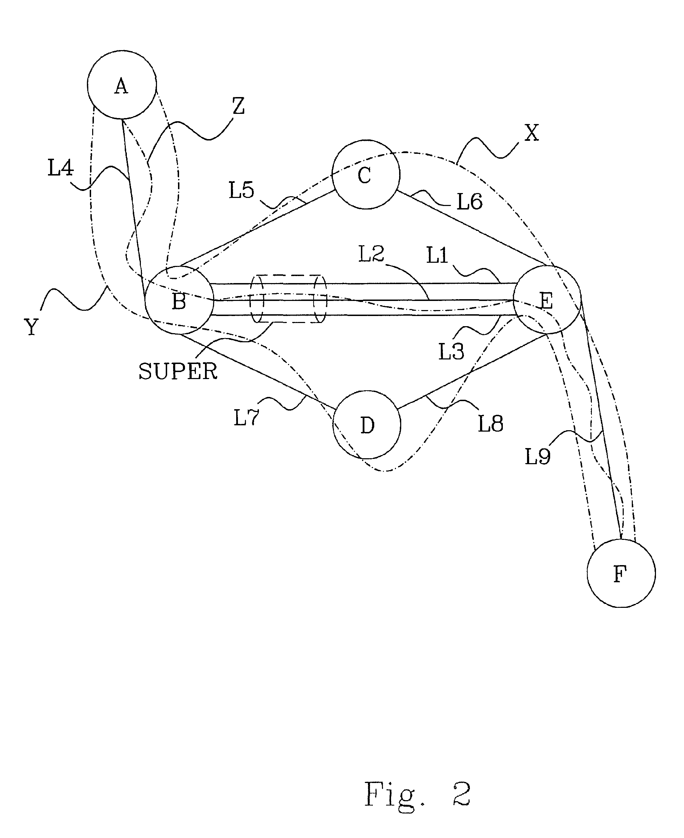

The two approaches (1) and (2) will later in the description be further discussed together with figure 2.

In the patent US 5,687,168 is disclosed an abstracted link obtained by a virtually aggregated plurality of links between two switches. Uniting link state information is a way to reduce the amount of information such as state of the links that has to be distributed between all links provided. The problem, how to select an optimal route among multiple parallel links, still remains.

### SUMMARY OF THE INVENTION

The present invention solves the problem to optimise a selection of a route in a communication system in case of multiple parallel links between two branch points within the route.

The problem is solved by the invention by using an abstract link between the two branch points. The abstract link is an aggregation of the multiple links. The abstract link includes the best topology state parameters of the multiple links.

More in detail, the invention discloses a method to expand a route in a communication system. The communication system comprises a set of multiple parallel links between two branch points in the system. Each link is described by topology state parameters such as a topology metric value and a topology attribute value. The method comprises the following steps:
- Selecting among the set of parallel links between the two branch points, the link with the best topology metric value;
- Selecting among the set of parallel links between the two branch points, the link with the best topology attribute value;
- Aggregating an abstract link between the two branch points, the abstract link being represented by the best topology metric value, and the best topology attribute value.

An arrangement according to the invention includes means to find the link with best topology metric value among a set of multiple links between two branch points. The arrangement also includes means to find the link with best topology attribute value among the set of multiple links. The arrangement furthermore includes means to aggregate links among the multiple links, to an abstract link having the best found topology metric value and the best found topology attribute value.

The object of the invention is to optimise the selection of a route and find an optimal link configuration for the route when it comprises multiple parallel links between two branch points.

An advantage with the invention is that a set of multiple parallel links between two nodes will be fully utilised.

Another advantage is that re-calculation of the same route more than once is prevented.

Yet another advantage is that the presentation of a route among routes in communication system will be optimised.

The invention will now be described more in detail with reference to exemplifying embodiments thereof and also with reference to accompanying drawings.

### DESCRIPTION OF THE DRAWINGS

Figure 1 is block schematic illustration of an ATM-based communication system having branch points of transmission links, for information to be transmitted within the system.
Figure 2 is a block schematic illustration comprising nodes in an ATM-based communication system having single links in-between, and nodes having multiple parallel links in-between.
Figure 3 is a flow chart disclosing the most important steps of a method according to the invention.
Figure 4 is a block schematic illustration of an aggregation arrangement according to the invention.

### DESCRIPTION OF PREFERRED EMBODIMENTS

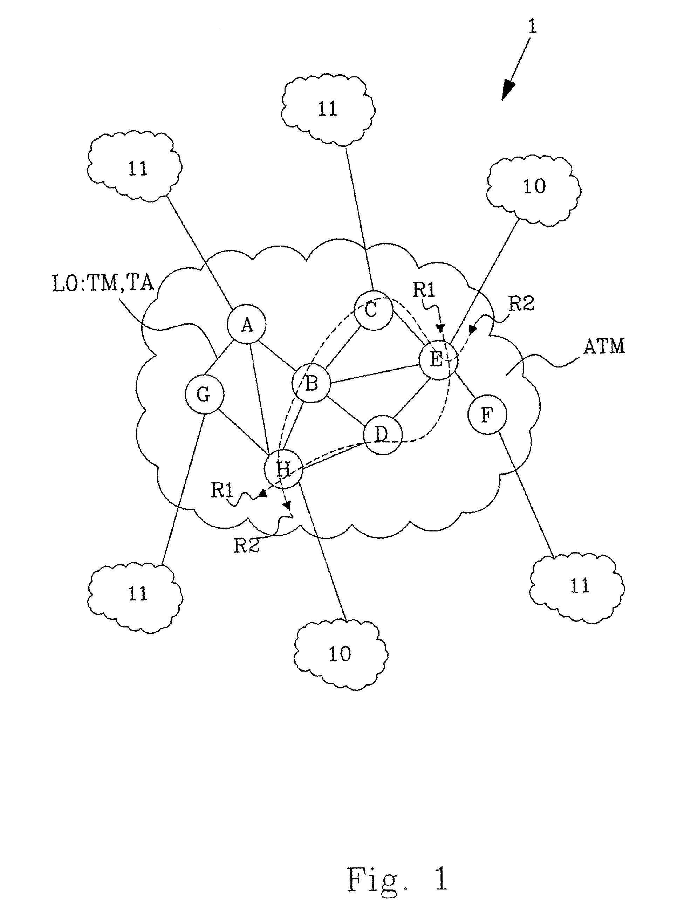

Today, more and more computing is accomplished through distributed processing. Distributed processing is defined as the distribution of network intelligence and processing to many network sites, where each site communicates on a peer-to-peer level, rather than through a centralised hierarchy. In figure 1 an ATM (ATM: Asynchronous Transfer Mode) peer group 1 is disclosed. ATM takes on many forms, for example the need for higher speeds, increased flexibility and improved efficiency. In the figure an ATM based core network ATM is illustrated. The core network ATM is attached to different LANs 10 (Local Access Network) and WANs 11 (Wide Area Network) to/from which information can be distributed via the ATM network. The core network ATM comprises branch points A-H, so called nodes of transmission links L0. Each transmission link has different topology qualities in different categories, topology metrics TM and topology attributes TA. Before transmitting data for example between the nodes E and H, possible routes between A and H have to be calculated and pointed out and put in a list, later to be selected. In an example in figure 1, which belongs to prior art, data will be transferred between the two LAN's 10. A first route R1 has been picked out, to be put in the list. The route R1 passes the nodes E, D and H. A second route R2 has also been picked out for the list, which second route passes the nodes E, C, B and H. The two routes R1 and R2 are just a minor part of all the possible routes that have been picked out and put in the list. Before actually selecting a route, the list has to be created by the system. The list includes some possible routes that can be selected for the transportation of data between the two LANs. The list discloses routes to select for transportation of data between the two LAN's 10. The earlier mentioned DJIKSTRA algorithm finds the best routes among all possible routes and put them in the list. DJIKSTRA works according to "shortest-path-first". In this prior art example a list of all routes between branch points E and H is created. After creation of the list, a route will be selected that fulfils necessary requirements for transportation of data, i.e. a route that has the necessary topology qualities.

An aggregation of a set of multiple parallel links into an abstract link SUPER according to the invention will now be explained together with figure 2. In figure 2 can be seen a part of the core network ATM that earlier was disclosed in figure 1. The network comprises the branch points A, B, C, D, E and F. Transmission links L1-L9 are located between the branch points. Among all pairs of branch points A-B, B-C, B-D, C-E, D-E, E-F and B-E having transmission links in-between, only the pair B-E have a set of multiple parallel transmission links in-between. The set of transmission links between the branch points B-E comprises a first transmission link L1, a second link L2 and a third link L3. All links L1-L9 comprise certain topology state parameters like topology metrics TM and topology attributes TA. Maximum Cell Transfer Delay is an example of topology metrics and Maximum Cell Rate is an example of topology attribute. Other examples of topology state parameters can be found in "The ATM Forum, Private Network-Network Interface" Letter ballot from March 1996. Topology metrics are represented by a "static" value set by for example a telephone system operator. The lower the value of topological metrics is, the larger are the chances for the link to be selected. The best value for topology metric value is the value 1. The operator thereby has the possibility to decide the order in which links shall be selected. Topology attributes are represented by a dynamic value that changes over time, for example when the traffic changes. The operator has no influence over this parameter, it is fully controlled by the traffic situation at that moment the link is examined by the system. The worst value for the topology attribute value is the value 0. All transmission link L1-L9 has topology state parameters such as topology metrics and attributes defined. It is to be noted that topology state parameters can include also other parameters than the exemplified. Also parameters other than those disclosed in "The ATM Forum, Private Network-Network Interface" can be used.

Below is an example of topology parameters at a certain time for the transmission links disclosed in figure 2:

| Transmission link | Topology Metrics TM | Topology Attributes TA |
|---|---|---|
| L1 | 1 | 5 |
| L2 | 2 | 7 |
| L3 | 5 | 30 |
| L4 | 2 | 40 |
| L5 | 1 | 10 |
| L6 | 2 | 10 |
| L7 | 1 | 9 |
| L8 | 3 | 15 |
| L9 | 2 | 30 |

In figure 2, three routes X, Y and Z have been disclosed. The three routes constitute alternatives to be used for transportation of data between the node A to the node F. To create the earlier mentioned list of routes that can be used between the nodes A and F, some possible routes have to be analysed regarding topology quality. Below follows a method to calculate the quality for the routes X and Y (and later also for the route Z), to be put in the list:
- The first route X between A and F is calculated by adding the topology metric values for the transmission links, uniting the two nodes A and F, along a first path. The links L4, L5, L6 and L9 together gives the topology metric value 2+1+2+2=7 for the first route X;
- The first route X between A and F is calculated by letting the worst topology attribute value among the topology attributes values 40,10,10,30 for the links uniting the two nodes A and F, represent the attribute value. The attribute value for the first route X is thereby 10.
- The second route Y between A and F is calculated by adding the topology metric value for the transmission links, uniting the two nodes A and F, along a second path. The links L4, L7, L8 and L9 together gives the topology metric value 2+1+3+2=8 for the second route Y;
- The second route Y between A and F is calculated by letting the worst topology attribute value among the topology attributes values 7,9,15,30 for the links uniting the two nodes A and F, represent the attribute value. The attribute value for the first route X is thereby 7.

The first route X has topology metric value 7 and topology attribute value 10. The second route Y has topology metric value 8 and topology attribute value 7. The third route Z between A and F differs from the first route X and the second route Y since it comprises a set of multiple parallel links. The multiple parallel links L1, L2 and L3 between the nodes B and E have the topological metrics value 1, 2 and 5 respectively. As mentioned in the part "Description of related art" earlier in the patent application, two different approaches has been used so far to describe a path between two branch point having multiple links in-between. The first approach (1) is to explicitly point out a link between the two nodes for the route. As an example, the transmission link L1 has been selected to represent the two branch points B and E for a route. The situation may arise when an incoming call (according its traffic description) requires topology attribute 6. In this case the route can not be selected since L1 only have topology attribute 5 and consequently can not handle the call. Instead another route will have to be selected from the list. When using the second approach (2) i.e. pointing out the two nodes and for example by mere chance letting a link among the parallel links represents the two nodes, another type of problem arises. If for example the second link L2 has been selected to represent the two nodes B and E, the route can be selected and used for a call. It can however only be selected as long as the required topology attribute for the call is the same or below the value 7 (the attribute value for L2). If the call requires topology attribute 9, the route can not be used and another route from the list has to be selected. Another route has to be selected even though the third link L3 between the nodes is well qualified to be used, L3 has topology attribute 30. As is easily understood from the examples above, the set of parallel transmission links between the two nodes, will not be fully utilised. The path between the two nodes will be rejected even though the path is well qualified to handle the call.

A method to handle the third route Z according to the invention will now be explained. The method takes care the above mentioned problems for the multiple parallel links. The method admits a fully utilisation of the multiple transmission links L1-L3, between the two branch points B and E. In this example an incoming call to be set-up between the nodes A and F, requires value 25 for topology attribute. The method explained in detail below, starts by aggregating the multiple links L1, L2 and L3 into an abstract link that fully utilises the set of links. Thereafter also the third route Z is calculated regarding the quality, to be put in the list. At the end of the method the best route is selected for an incoming call. More in detail, the method comprises the following steps:
- Analysing of the first link L1 regarding topology metrics. The first link L1 is found to have the topology metric value 1 which value is stored by the system.
- Analysing of the second link L2 regarding topology metrics. The second link L2 is found to have the topology metric value 2 which value is compared with the stored value 1 belonging to the first link 1. The best value i.e. the value 1 is kept stored by the system.
- Analysing of the third link L3 regarding topology metrics. The third link L3 is found to have the topology metric value 5 which value is compared with the stored value 1 belonging to the first link 1. The best value i.e. the value 1 is kept stored by the system.
- The first link L1 is found to have the best topology metric value among the multiple transmission links.
- Analysing of the first link L1 regarding topology attribute. The first link L1 is found to have the topology attribute value 5 which value is stored by the system.
- Analysing of the second link L2 regarding topology attributes. The second link L2 is found to have the topology attribute value 7 which value is compared with the stored value 5 belonging to the first link 1. The best value i.e. the value 7 is stored by the system.
- Analysing of the third link L3 regarding topology attributes. The third link L3 is found to have the topology attribute value 30 which value is compared with the stored value 7 belonging to the second link 2. The best value i.e. the value 30 is stored by the system.
- The third link L3 is found to have the best topology attribute value among the multiple transmission links.
- Aggregation of the multiple links into an abstract link SUPER by giving the abstract link the best found topology metric value 1 belonging to the first link L1 and the best found topology attribute value 30 belonging to the third link L3.
- The third route Z between A and F is calculated by adding the topology metrics for the transmission links uniting the two nodes A and F, along a third path. The links L4, SUPER, and L9 together gives the topology metrics value 2+1+2=5 for the second route Y;
- The third route Z between A and F is calculated by letting the worst topology attribute value among the topology attributes values 7,30,30 for the links uniting the two nodes A and F, represent the attribute value. The attribute value for the third route Z is thereby 7.
- The last calculated route, route Z, is placed in the list. The list now comprises all three routes X, Y and Z arranged in decreasing succession with the route having the best topology metrics arranged first in the list. The routes X, Y and Z have the topology metric value 7,8,1 and are consequently arranged in the order Z, X, Y.
- An incoming call, which according to its traffic description needs topology attributes 6, initiates a search for a route between the nodes A and F.
- The route with sufficient topology metrics appearing first in the list is selected for setting up the call. The selected route is the route Z.
- Since the route Z has the topology metrics value 1 and topology attributes value 7, the route Z is accepted for the call.

As have been seen the route Z was selected for the call. The route Z, fully capable to handle the call, would instead have been rejected if the method according to the invention not had been used.

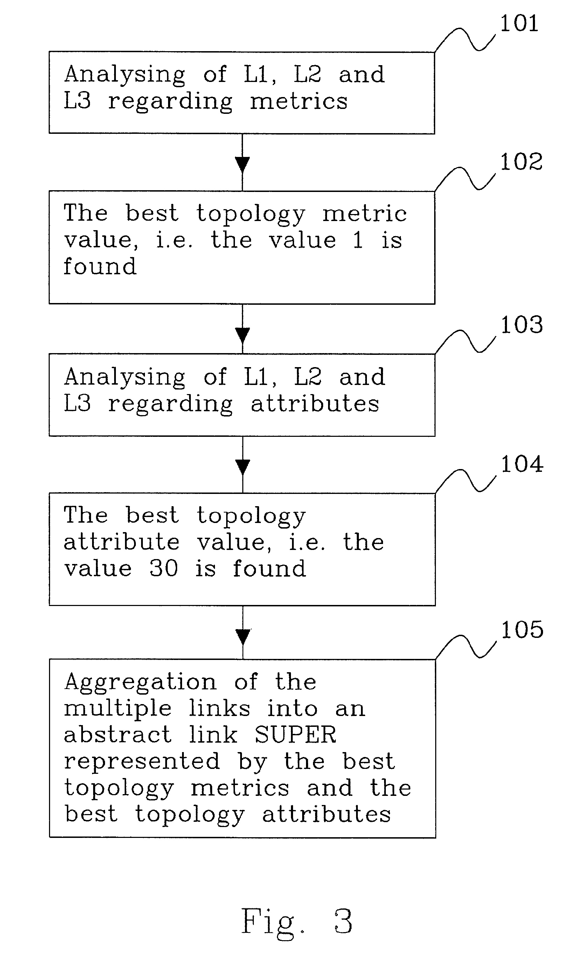

The most important steps of the method above are disclosed in figure 3. Figure 3 discloses the most essential steps in a flow chart. The flow chart is meant to be read together with figure 2. The most essential steps in the method are as follows:
- Analysing of the three links L1, L2 and L3 regarding topology metrics. A block 101, in figure 3 illustrates this step.
- The best topology metrics value, i.e. the value 1 belonging to L1 is found by the system. A block 102, in figure 3 illustrates this step.
- Analysing of the three links L1, L2 and L3 regarding topology attributes. A block 103, in figure 3 illustrates this step.
- The best topology attribute value, i.e. the value 30 belonging to L3 is found by the system. A block 104, in figure 3 illustrates this step.
- Aggregation of the multiple links into an abstract link SUPER by giving the abstract link the best found topology metric value 1 and the best found topology attribute value 30. A block 105, in figure 3 illustrates this step.

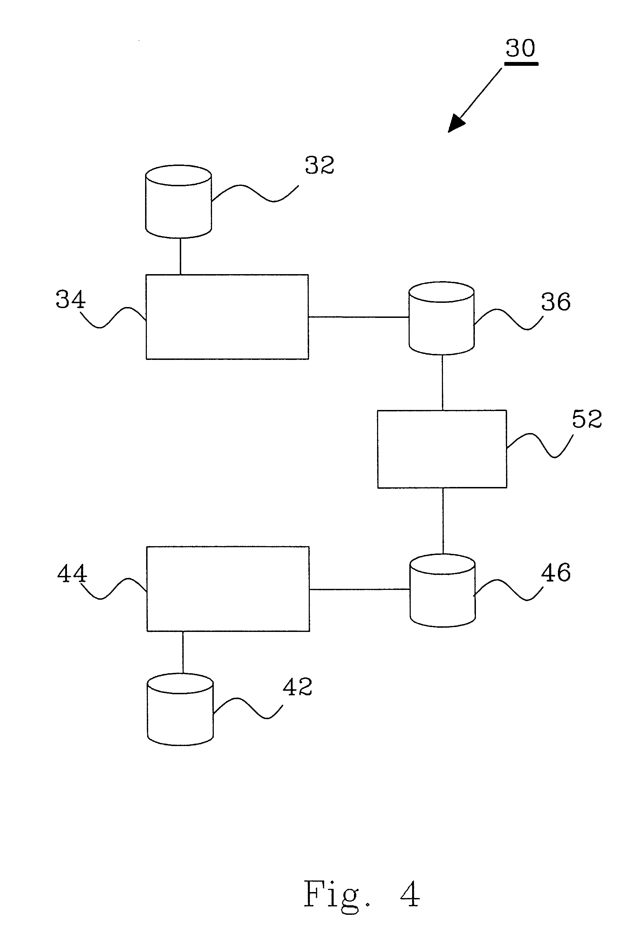

In figure 4 is disclosed an example of an arrangement to put the invention into practice. Figure 4 discloses a super link aggregation arrangement 30. The arrangement 30 comprises a metrics database 32 in which topology metric values for different links are stored. The arrangement also comprises a metrics compare arrangement 34, which compare metric values from selected parallel links between two nodes. The arrangement 30 also comprises an attribute database 42 in which topology attribute values for different links are stored. The arrangement also comprises an attribute compare arrangement 44, which compare attribute values from the parallel links between the said nodes. The arrangement furthermore comprises a best metric database 36 in which the best metric value is stored. In a best attribute database 46, the best topology attribute value is stored. An aggregation arrangement 53 is reading the values from the metric database and the attribute database and aggregate an abstract link by presenting the abstract link with the best topology metric value and the best topology attribute value.

Different variations are possible within the scope of the invention. The number of parallel links between two branch points does for example not affect the idea behind the invention. The number of node-pairs having multiple parallel transmission links in-between is also of less importance and within the scope of the invention. It is also to be noted that topology state parameters can include other parameters than the one exemplified. Also parameters other than those disclosed in "The ATM Forum, Private Network-Network Interface" can be used. The invention is thus not restricted to the above described and illustrated exemplifying embodiments, and modifications can be made within the scope of the invention.

## Claims

1. Method to optimise route selection in a communication system comprising branch points (A-F) of transmission links (L1-L9), the quality of each link being represented by topology parameters (TM, TA) divided into categories, whereby two of the branch points (B, E) have a set of multiple parallel links (L1, L2, L3) in-between, said method being **characterised by** the following steps:
- selecting among the set of parallel links (L1, L2, L3), the links having the most favourable topology parameter (TM, TA), each category;
- aggregating the set of parallel links into an abstract link (SUPER) between the two branch points (B, E), the abstract link (SUPER) being represented by each categories most favourable topology parameter (TM, TA).

2. Method according to claim 1, the selection of the links having the best topology parameters comprising the following further steps:
- comparing all topology parameters for each category belonging to the set of parallel links;
- storing of the best topology parameter value, each category.

3. Method to optimise route selection in a communication system having branch points (A-F) of transmission links (L1-L9), the quality of each link being represented by a topology metric value (TM) and a topology attribute value (TA), said method being **characterised by** the following steps:
- selecting among a set of parallel links (L1, L2, L3) between two of the branch points (B, E), a link (L1) having the best topology metric value (TM);
- selecting among the set of parallel links (L1, L2, L3) between the two branch points (B, E), a link (L3) having the best topology attribute value (TA);
- aggregating the set of multiple links into an abstract link (SUPER) between the two branch points (B, E), the abstract link being represented by the best topology metric value (TM) and by the best topology attribute value (TA).

4. Method according to claim 1, the selection of the link having the best topology metric value comprising the following further steps:
- comparing all topology metric values belonging to the set of parallel links;
- storing of the best topology metric value (TM) among the values belonging to the set of parallel links.

5. Method according to claim 1 or 2, the selection of the link having the best topology attribute value (TA) comprising the following further steps:
- comparing all topology attribute values belonging to the set of parallel links;
- storing of the best topology attribute value among the values belonging to the set of parallel links.

6. Arrangement to optimise route selection in a communication system having branch points (A-F) of transmission links (L1-L9), the quality of each link being represented by topology parameters (TM, TA) within different categories, whereby two of the branch points (B, E) have a set of multiple parallel links (L1, L2, L3) in-between, said arrangement being **characterised by**:
- means for selecting among the set of parallel links (L1, L2, L3), the links having the most favourable topology parameter (TM, TA), each category;
- means for aggregating the set of parallel links into an abstract link (SUPER) between the two branch points (B, E), the abstract link (SUPER) being represented by the most favourable topology parameter (TM, TA), each category.

7. Arrangement according to claim 6, furthermore comprising:
- means for comparing all topology parameters for each category belonging to the set of parallel links;
- means for storing of the best topology parameter value, each category.
